# DEMANDE DE BREVET EUROPEEN

(11) **EP 1 883 034 A2**
(43) Date de publication de la demande: **30.01.2008**
(21) Numéro de dépôt: 07014677.4
(22) Date de dépôt: 26.07.2007
(51) Int. Cl.: G06F 21/02, G06F 21/20

(54) **Procédé de sécurisation pour appareil électronique utilisant une carte à puce**

(30) Priorité: 28.07.2006 FR 0653193
(71) Demandeur: Ercom Engineering Réseaux Communications, 78140 Vélizy-Villacoublay (FR)
(72) Inventeur: Laubacher, Eric, 78180 Montigny-Le Bretonneux (FR)
(74) Mandataire: Lebrette, Camille

(57) **Abrégé**

L'invention se rapporte à un procédé de sécurisation pour appareil électronique (10) disposant d'une carte à puce (11), notamment de type SIM ou USIM et d'une mémoire (17) destinée à contenir des données sensibles (13), et sur lequel est installé au moins un programme (15), le procédé étant tel que l'appareil électronique (10) se trouve dans l'un des trois états de sécurité suivants :
- un état déverrouillé, dans lequel les données sensibles (13) sont accessibles par le programme (15) et par un utilisateur (16),
- un état de verrouillage intermédiaire, dans lequel les données sensibles (13) sont accessibles par le programme (15) et leur accès par l'utilisateur (16) est conditionné par l'entrée d'un code secret (19), et
- un état sécurisé dans lequel l'accès aux données sensibles (13) par le programme (15) et/ou par l'utilisateur (16) est conditionné par l'entrée du code secret (19),

et le procédé étant également tel que les données sont chiffrées à l'aide d'au moins une clé de chiffrement (12) contenue dans une mémoire de la carte à puce (11).

## Description

La présente invention concerne un procédé de sécurisation pour appareil électronique disposant d'une carte à puce et/ou à microprocesseur, dite carte à puce, notamment de type SIM ou USIM, et d'une mémoire destinée à contenir des données.

Dans l'état actuel de la technique, les appareils électroniques sont uniquement sécurisés par un mot de passe, par exemple un code à quatre chiffres, qu'il faut entrer dans l'appareil afin de pouvoir l'utiliser. Ce système de sécurisation présente l'inconvénient majeur que les codes secrets utilisés ont une usure relativement rapide, puisqu'ils sont généralement faciles à repérer par des personnes qui peuvent côtoyer l'utilisateur du code.

Une alternative simple à ce problème consisterait en l'utilisation d'un code plus long, et donc plus difficilement repérable. L'inconvénient dans ce cas est que ce code serait moins facilement mémorisable, ce qui ne serait pas très adapté pour un utilisateur qui devrait l'entrer régulièrement dans un appareil électronique.

Une solution pour remédier à cela a été divulguée dans la demande européenne n° 05300917.1. Cette demande concerne un procédé de sécurisation utilisant un code long permanent et un code court éphémère. Le code long est utilisé relativement peu souvent, par exemple une ou deux fois par jour, donc le fait qu'il soit difficile à mémoriser n'est pas un inconvénient majeur. Par ailleurs, lors de l'entrée de ce code long dans un appareil électronique, on fournit à l'utilisateur un code court, facile à mémoriser, mais qui n'est valable que pour une durée ou un nombre d'utilisations déterminé, ce qui permet d'éviter le phénomène d'usure décrit précédemment.

Dans l'invention décrite dans cette demande, le code long est généré par une carte à puce et/ou à microprocesseur contenue dans l'appareil électronique. Un de inconvénients de cette solution réside dans le fait que, pour être efficace en terme de sécurisation, il est nécessaire de disposer d'une carte à puce et/ou à microprocesseur permettant de générer des clés cryptographiques avec une forte entropie. Or, de telles cartes sont rarement compatibles avec les appareils électroniques classiques que l'on trouve dans le commerce, ce qui restreint les possibilités d'application de ce procédé.

L'invention vise à remédier à cet inconvénient en fournissant un moyen pour sécuriser les données de manière efficace, et sans que l'utilisateur n'ait besoin de mémoriser un code trop long.

Ainsi, l'invention concerne un procédé de sécurisation pour appareil électronique disposant d'une carte à puce, notamment de type SIM ou USIM et d'une mémoire destinée à contenir des données sensibles chiffrées, et sur lequel est installé au moins un programme, le procédé étant tel que l'appareil électronique se trouve dans l'un des trois états de sécurité suivants :
- un état déverrouillé, dans lequel les données sensibles sont accessibles par le programme et par l'utilisateur,
- un état de verrouillage intermédiaire, dans lequel les données sensibles sont accessibles par le programme et leur accès par un utilisateur est conditionné par l'entrée d'un code secret, et
- un état sécurisé dans lequel l'accès aux données sensibles par le programme et/ou l'utilisateur est conditionné par l'entrée du code secret,
et le procédé étant également tel que les données sont chiffrées à l'aide d'au moins une clé de chiffrement contenue dans une mémoire de la carte à puce.

On précise ici que par « données sensibles » on entend des données utilisateurs.

De façon générale, un appareil électronique selon l'invention présente une mémoire qui contient plusieurs types de données :
- Des données de type « données système », propres à l'appareil en lui-même, et qui ne dépendent pas de l'utilisateur. Ces données ne sont pas nécessairement protégées puisqu'elles sont identiques sur tous les appareils électroniques du même type.
- Des données sensibles, qui contiennent des informations personnelles de l'utilisateur.
Parmi ces données sensibles, on peut distinguer différents niveaux de sensibilité. En effet, la mémoire de l'appareil électronique peut contenir d'une part des données hypersensibles, telles que des mots de passe, des certificats, ou des clés de chiffrement, et d'autre part des données utilisateurs telles que des adresses, des documents texte ou des fichiers d'agenda.

L'état sécurisé est l'état dans lequel se trouve l'appareil initialement, c'est à dire après chaque mise sous tension consécutive à une coupure d'alimentation.

L'état de verrouillage intermédiaire correspond, par exemple, à un état de veille de l'appareil. Dans cet état, l'utilisateur n'a pas accès aux programmes de son appareil, puisque celui-ci est en veille, mais en revanche les programmes ont toujours accès aux données en mémoire. Dans ce cas, les données en mémoire sont déchiffrées à la volée lorsqu'un programme le demande, à l'aide d'une clé de chiffrement contenu dans la carte à puce ou une mémoire de l'appareil électronique.

Selon une réalisation, le code secret utilisé pour accéder à la clé de chiffrement et/ou aux données sensibles est un code associé à la carte à puce, de type PIN à quatre chiffres.

Les cartes SIM et USIM installées dans les appareils électroniques tels que des téléphones mobiles ou des PDA communicants sont dotées d'un mécanisme de vérification de code PIN. Le principe de ce mécanisme est que la carte SIM ou USIM est automatiquement verrouillée après trois erreurs successives dans l'entrée du code.

Le fait d'utiliser ce code PIN en tant que code secret pour l'accès aux clés de chiffrement et/ou aux données permet de profiter de ce mécanisme déjà présent dans la carte à puce.

Ainsi, on stocke la clé de chiffrement dans un fichier en mémoire de la carte à puce, et l'accès à cette clé sera conditionné par l'activation de la carte à puce par le code PIN. Un fichier, présent dans la carte à puce, et susceptible de contenir des données est, par exemple, l'annuaire de la carte. En effet, il est possible de stocker une clé de chiffrement dans une entrée de l'annuaire, puisque cet annuaire n'est pas accessible lorsque l'appareil électronique est dans un état de verrouillage intermédiaire ou dans un état sécurisé.

Bien qu'envisageable, cette solution ne présente pas toutes les garanties de sécurité que l'on pourrait souhaiter. En effet, l'annuaire est un fichier auquel l'utilisateur a accès, et qui est susceptible d'être modifié par lui, notamment pour y ajouter des entrées. Dans ce cas, il y a des risques d'effacement ou de modification involontaires d'une clé de chiffrement de la part de l'utilisateur. Une telle modification aurait pour effet de bloquer l'accès des données pour l'utilisateur dès la coupure d'alimentation suivante. Par ailleurs, l'annuaire est un fichier connu de toute personne ayant l'habitude d'utiliser un appareil électronique de type téléphone mobile, et ainsi il serait relativement facile pour une personne malintentionnée de récupérer une clé de chiffrement lors d'un moment d'inattention du propriétaire de l'appareil électronique.

Pour remédier à cela, dans une réalisation, la clé de chiffrement est stockée dans un fichier auquel l'utilisateur n'accède pas en fonctionnement normal de l'appareil.

Ces fichiers sont, par exemple, des fichiers de paramètres dont certaines parties sont inutilisées, ou des fichiers contenant le numéro personnel de l'utilisateur, appelé numéro ISDN. ISDN signifie Integrated Digital Services Network, c'est à dire Réseau Numérique à Intégration de Services. Dans la norme de téléphonie mobile ETSI GSM 11.11, ces fichiers sont respectivement référencés sous les noms EF_{CCP} et EF_{MSISDN}.

Afin que les données chiffrées soient protégées au mieux, il est utile que les clés de chiffrement aient une forte entropie, de manière à être difficilement décryptables.

Or, les cartes à puce de type SIM ou USIM ne permettent pas générer des aléas.

Il est donc nécessaire d'obtenir une source d'aléas, externe ou interne à l'appareil électronique, par exemple le microphone de l'appareil électronique.

Dans un autre exemple, la source externe d'aléas est fournie par un ordinateur personnel, de type PC, auquel est connecté l'appareil électronique. L'ordinateur est, par exemple, muni d'un générateur aléatoire tel qu'une carte à puce.

La protection de la carte à puce par un code PIN utilisée ici peut également l'être pour le stockage d'autres éléments en mémoire de la carte. Ainsi, dans un exemple, la mémoire de l'appareil électronique contient des mots de passe utilisés pour l'accès à certains programmes installés dans l'appareil électronique, et chiffrés à l'aide d'une clé de chiffrement contenue en mémoire de la carte à puce.

En effet, certains appareils électroniques contiennent des programmes qui ne peuvent être activés que par la saisie d'un code secret. Or, il n'est pas toujours évident pour un utilisateur de retenir un grand nombre de mots de passe.

Cette fonctionnalité permet donc d'inscrire des mots de passe en mémoire de l'appareil électronique, sous forme chiffrée. Ainsi, lorsque l'utilisateur demande l'ouverture d'un programme installé dans l'appareil électronique et protégé par un mot de passe, ce mot de passe peut être automatiquement récupéré depuis la mémoire de l'appareil électronique, sans intervention de l'utilisateur qui s'est contenté d'entrer son code PIN lors du début de la phase d'utilisation de l'appareil électronique.

Cette fonctionnalité d'authentification unique, dite SSO (Single Sign On) sera décrite en détail plus loin à l'aide des figures.

La présente invention présente l'avantage de ne pas nécessiter d'adaptation des appareils électroniques existants, puisque le procédé utilise des cartes à puce de type SIM ou USIM telles que celles déjà utilisées dans les appareils classiques.

D'autres caractéristiques et avantages de l'invention apparaîtront avec la description de certains de ses modes de réalisation, cette description étant effectuée à titre non limitatif à l'aide des dessins sur lesquels :
- la figure 1 représente un appareil électronique utilisant un procédé de sécurisation conforme à l'invention, et
- la figure 2 représente les différents états dans lequel se trouve un appareil électronique utilisant un procédé de sécurisation conforme à l'invention, et

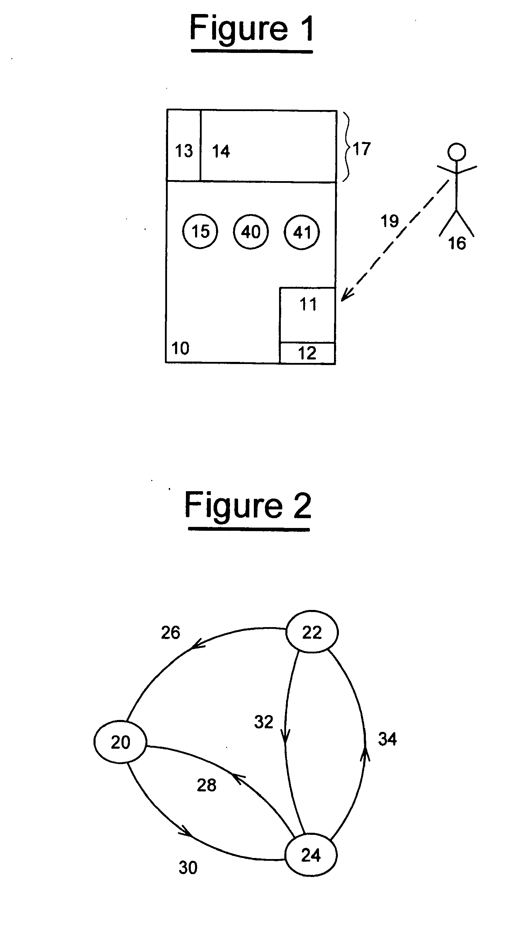

La figure 1 fait apparaître un appareil électronique classique, de type téléphone mobile

L'appareil électronique 10 est muni d'une carte SIM 11 en mémoire de laquelle se trouve une clé de chiffrement 12. La taille de cette clé est, par exemple, 256 bits.

L'appareil électronique 10 contient également une mémoire 17 divisée en plusieurs zones. La zone 13 est une zone de secret, contenant des données hypersensibles telles que des mots de passe, des certificats, des clés de chiffrement ou autres données secrètes. Ces données sont chiffrées à l'aide de la clé de chiffrement 12 contenue dans carte SIM 11. La zone 14 contient des données utilisateurs telles que des adresses, des fichiers d'agenda, ou encore des documents texte. Les données contenues dans la zone 14 sont chiffrées à l'aide d'une clé de chiffrement présente dans la zone 13.

Les tailles de ces différentes zones sont variables ; par exemple, la zone 13 aura une taille de l'ordre de quelques kilo-octets, et la zone 14 pourra avoir une taille proche de la taille de la mémoire totale de l'appareil.

Il n'est généralement pas possible de stocker dans la carte SIM 11 plus d'une seule clé de chiffrement 12, ce qui implique le stockage des autres clés de chiffrement dans la zone 14 de la mémoire 17 de l'appareil électronique 10.

Une telle mise en oeuvre permet à un utilisateur 16 de disposer d'une fonction d'authentification unique pour l'utilisation de son appareil électronique 10. Lorsque l'utilisateur souhaite utiliser son appareil électronique, il entre le code PIN 19 de la carte SIM, ce qui lui donne l'accès à la mémoire de la carte SIM, et généralement au programme 15 installé sur l'appareil.

L'activation de certains programmes nécessite l'entrée de mots de passe supplémentaires, ce qui n'est pas très ergonomique pour l'utilisateur 16. Le principe de l'authentification unique permet de remédier à cet inconvénient. En effet, toutes les données d'identification nécessaires au fonctionnement de l'appareil 10 sont contenues en mémoire 17 de l'appareil. Lorsqu'un utilisateur entre le code PIN de la carte à puce, cette carte est débloquée. Ainsi, il est possible d'accéder à la clé de chiffrement 12. A partir de cette clé de chiffrement 12, on peut déchiffrer toutes les données contenues dans la zone 13. Ce déchiffrement à la volée est effectué par un programme de chiffrement/déchiffrement 40 installé dans l'appareil électronique 10. Ce programme est tel qu'il va chercher les clés de chiffrement en mémoire de la carte à puce 11 ou en mémoire de l'appareil 10, selon le type de données à déchiffrer. Notamment, on peut déchiffrer des clés de chiffrement à partir desquelles seront déchiffrées, à leur tour, et lorsque nécessaires, les données contenues dans la zone de mémoire 14.

Ainsi, les données contenues dans la zone de mémoire 13 sont présentées aux différents programmes à la place de l'utilisateur 10, de manière totalement transparente pour lui.

Les données nécessaires au fonctionnement de l'appareil électronique 10 et en particulier du programme 15 sont déchiffrées à la volée par le programme 40 sur demande d'un ou de plusieurs programmes de l'appareil.

Ce déchiffrement à la volée dépend de l'état dans lequel se trouve l'appareil électronique 10. Les différents états possibles sont décrits à l'aide de la figure 2.

Initialement, l'appareil électronique se trouve dans un état sécurisé 20. Dans cet état, les données sensibles en mémoire de l'appareil sont chiffrées à l'aide d'une des clés de chiffrement, et ne sont accessibles ni par un programme installé sur l'appareil, ni par un utilisateur.

La sortie de cet état est conditionnée par l'action 30 correspondant à l'entrée du code PIN de la carte SIM dans l'appareil électronique. Cette saisie de code a pour effet de faire passer l'appareil dans un état déverrouillé 24. Dans cet état, l'utilisateur a accès à tous les programmes et à toutes les données de l'appareil électronique. Les données sont déchiffrées à la volée par le programme 40 dès qu'un programme 15 et/ou un utilisateur 16 en ont besoin.

Si l'appareil est doté d'une fonction de mise en veille, l'activation 34 de cette fonction a pour effet de faire passer l'appareil dans un état de verrouillage intermédiaire 22. Dans cet état, le programme a toujours accès aux données sensibles, qui sont déchiffrées sur une requête de sa part. En revanche, l'appareil étant en veille, l'utilisateur n'a plus accès aux programmes, et par la même n'a plus accès aux données. La sortie de cet état de verrouillage intermédiaire 22 et pour retourner dans l'état déverrouillé 24, fait appel à un programme de sécurité spécifique 41 demandant à l'utilisateur d'entrer le code PIN pour accéder aux fonctions de l'appareil 10.

Ce programme de sécurité 41 permet également, lorsque l'appareil est dans l'état de verrouillage intermédiaire 22, de filtrer toutes les communications de l'appareil électronique 10 vers l'extérieur. Ceci permet d'éviter un contournement du procédé de sécurisation mis en place.

Quelque soit l'état de l'appareil, déverrouillé 24 ou verrouillage intermédiaire 22, toute coupure d'alimentation a pour effet de remettre l'appareil électronique dans l'état sécurisé 20. Une coupure d'alimentation peut être intentionnelle, par exemple lorsque l'utilisateur demande l'extinction de l'appareil, ou non, par exemple si l'appareil électronique ne dispose plus d'une charge de batterie suffisante.

On voit ici apparaître tout l'intérêt du procédé de sécurisation décrit ici. En effet, ce procédé permet de sécuriser des données de manière relativement efficace, puisqu'elles sont chiffrées par une clé de chiffrement suffisamment longue, sans être trop gênant pour l'utilisateur, puisque ce dernier n'a besoin que de retenir un code PIN à quatre chiffres.

Dans le cas où l'appareil électronique serait volé, il serait très difficile pour le voleur d'exploiter les données sensibles contenues dans la mémoire.

En effet, si l'utilisateur vole l'appareil lorsqu'il est dans le mode sécurisé, les données sont chiffrées avec une clé de chiffrement très difficile à décrypter. Dans le cas où l'appareil volé est dans l'état de verrouillage intermédiaire, le voleur devra, pour accéder aux données, attaquer le programme demandant l'entrée du code PIN pour l'activation des fonctions de l'appareil.

## Revendications

1. Procédé de sécurisation pour appareil électronique (10) disposant d'une carte à puce (11), notamment de type SIM ou USIM et d'une mémoire (17) destinée à contenir des données sensibles (13), et sur lequel est installé au moins un programme (15), le procédé étant tel que l'appareil électronique (10) se trouve dans l'un des trois états de sécurité suivants :
- un état déverrouillé (24), dans lequel les données sensibles (13) sont accessibles par le programme (15) et par un utilisateur (16),
- un état de verrouillage intermédiaire (22), dans lequel les données sensibles (13) sont accessibles par le programme (15), et leur accès par l'utilisateur (16) est conditionné par l'entrée d'un code secret (19), et
- un état sécurisé (20) dans lequel l'accès aux données sensibles (13) par le programme (15) et/ou par l'utilisateur (16) est conditionné par l'entrée du code secret (19),
et le procédé étant également tel que les données sont chiffrées à l'aide d'au moins une clé de chiffrement (12) contenue dans une mémoire de la carte à puce (11).

2. Procédé selon la revendication 1 dans lequel le code secret (19) utilisé pour accéder à la clé de chiffrement (12) et/ou aux données sensibles est un code associé à la carte à puce (11), de type code PIN à quatre chiffres

3. Procédé selon la revendication 1 ou 2 dans lequel la clé de chiffrement (12) est stockée dans un fichier de la carte à puce (11) auquel l'utilisateur (16) n'accède pas en fonctionnement normal de l'appareil (10).

4. Procédé selon l'une des revendications précédentes dans lequel la mémoire (17) de l'appareil électronique (10) contient des mots de passe utilisés pour l'accès à certains programmes installés dans l'appareil électronique, et chiffrés par une clé de chiffrement (12) contenue dans la mémoire de la carte à puce (11).

5. Procédé selon l'une des revendications précédentes dans lequel la mémoire (17) de l'appareil électronique (10) contient des données chiffrées (14) à l'aide d'une clé de chiffrement également contenue dans la mémoire (17) de l'appareil électronique (10).
